# EUROPEAN PATENT APPLICATION

(11) **EP 4 712 285 A1**
(43) Date of publication of application: **18.03.2026**
(21) Application number: 25782857.4
(22) Date of filing: 23.01.2025
(51) Int. Cl.: H02J 3/00, H02J 3/32, H02J 3/38, G06Q 50/06, H02J 7/00, B60L 58/12, B60L 55/00

(54) **POWER MANAGEMENT DEVICE AND METHOD FOR POWER TRADING**

(30) Priority: 05.04.2024 KR 20240046622
(71) Applicant: LG Energy Solution, Ltd., Seoul 07335 (KR)
(72) Inventor: KIM, Daesoo, Daejeon 34122 (KR)
(74) Representative: BCKIP Part mbB
(86) International application number: PCT/KR2025/001293
(87) International publication number: WO 2025/211551

(57) **Abstract**

A power management device according to an embodiment of the present invention is a power management device for managing the power of a battery included in a transportation means, and may comprise: at least one processor; and a memory for storing at least one instruction executed through the at least one processor. The at least one instruction may include: an instruction for classifying and storing information on the charging power of the battery according to energy type; an instruction for, when a power transaction request for charging power of a specific energy type is received, determining whether to agree to the power transaction on the basis of the amount of the charging power of the specific energy type; and an instruction for checking the amount of power discharged by the battery in response to the power transaction when the power transaction is agreed to.

## Description

### [Technical Field]

This application claims priority to and the benefit of Korean Patent Application No.10-2024-0046622 filed in the Korean Intellectual Property Office on April 5, 2024 the entire contents of which are incorporated herein by reference.

The present invention relates to a power management apparatus and method, and more particularly, to a power management apparatus and method for trading power of a battery included in a means of transportation.

### [Background Art]

RE100 is an abbreviation for 'Renewable Electricity 100%', which is an international campaign that aims to supply 100% of the electricity used by companies with renewable energy. Here, the renewable energy may refer to energy that replaces fossil fuels and may include energy generated from solar thermal energy, solar photovoltaic energy, bioenergy, wind energy, hydroelectric energy, and geothermal energy.

In order to achieve RE100, companies are directly installing power generation facilities that utilize renewable energy or purchasing power generated from power plants based on renewable energy. However, the installation of power generation facilities and the purchase of power may be very expensive, and the secured power thereof alone has limitations in meeting the company's power demand.

Meanwhile, a plan to supply power from an energy storage system (ESS) linked to a PV (Photovoltaic) system may be considered, but however, in order for this plan to be realized, additional transmission and distribution lines must be installed to supply power from the ESS and separate facilities are needed to stabilize the voltage and frequency.

Among the prior art documents relevant to the present invention, KR 10-2011-0072531 is of some relevance.

### [Detailed Description of the Invention]

### [Technical Problem]

To obviate one or more problems of the related art, embodiments of the present disclosure provide a power management apparatus for trading power of a battery included in a means of transportation.

To obviate one or more problems of the related art, embodiments of the present disclosure also provide a power management method performed by the power management apparatus.

### [Technical Solution]

In order to achieve the objective of the present disclosure, a power management apparatus according to embodiments of the present invention may include at least one processor and a memory that stores at least one instruction executed through the processor.

Here, the at least one instruction may include an instruction to classify information about charge power of the battery by energy type and to store the classified information; an instruction to determine whether to conclude a power transaction based on amount of charge power of a specific energy type, when a request for power transaction for charge power of the specific energy type is received; and an instruction to identify amount of power discharged by the battery in response to the power transaction when the power transaction is completed.

The instruction to classify the information about the charge power of the battery by energy type and to store the classified information may include an instruction to classify and record the amount of charge power of the battery as type 1, which is charged using a renewable energy source, and type 2, which is charged using grid power.

The instruction to classify the information about the charge power of the battery by energy type and to store the classified information may include an instruction to receive and record the amount of charge power for each energy type at predetermined time intervals, from an energy management apparatus of an energy storage system which is connected and communicate with the means of transportation.

The instruction to determine whether to conclude the power transaction may include an instruction to receive a power transaction request information including a requested energy type and the requested amount of charge power from a charge request device or a power trading device; and an instruction to determine whether the battery is capable of providing power, based on the requested energy type and the requested amount of charge power, and charged power amount of the battery for each energy type.

The instruction to determine whether to conclude the power transaction may include an instruction to determine that the power transaction is concluded if the battery is capable of providing power and a transaction acceptance signal from a user is received.

The instruction to identify the amount of power discharged by the battery may include an instruction to update pre-stored amount of charged power for each energy type, based on the power amount discharged by the battery in response to the power transaction.

The at least one instruction may further include an instruction to provide information on the amount of power discharged by the battery to a power trading device, to calculate power transaction costs.

According to another embodiment of the present disclosure, a power management method, performed by a power management apparatus that manages power of a battery included in a means of transportation, may include classifying information about charge power of the battery by energy type and storing the classified information; determining whether to conclude a power transaction based on amount of charge power of a specific energy type, when a request for power transaction for charge power of the specific energy type is received; and identifying amount of power discharged by the battery in response to the power transaction when the power transaction is completed.

The classifying the information about the charge power of the battery by energy type and storing the classified information may include classifying and recording the amount of charge power of the battery as type 1, which is charged using a renewable energy source, and type 2, which is charged using grid power.

The classifying the information about the charge power of the battery by energy type and storing the classified information may include receiving and recording the amount of charge power for each energy type at predetermined time intervals, from an energy management apparatus of an energy storage system which is connected and communicate with the means of transportation.

The determining whether to conclude the power transaction may include receiving a power transaction request information including a requested energy type and the requested amount of charge power from a charge request device or a power trading device; and determining whether the battery is capable of providing power, based on the requested energy type and the requested amount of charge power, and charged power amount of the battery for each energy type.

The determining whether to conclude the power transaction may include determining that the power transaction is concluded if the battery is capable of providing power and a transaction acceptance signal from a user is received.

The identifying the amount of power discharged by the battery may include updating pre-stored amount of charged power for each energy type, based on the power amount discharged by the battery in response to the power transaction.

The method may further include providing information on the amount of power discharged by the battery to a power trading device, to calculate power transaction costs.

### [Advantageous Effects]

According to embodiments of the present disclosure, it is possible to support power trading between a purchaser who wants to be supplied with power of a specific energy type and an owner of a means of transportation and furthermore, the traded power may be supplied without installing a separate power supply network.

### [Brief Description of the Drawings]

FIG. 1 is a block diagram of an energy storage system that may be linked with the present invention.
FIG. 2 shows an example of an implementation of an energy storage system that may be linked with the present invention.
FIG. 3 is a flowchart of a power management method according to embodiments of the present invention.
FIG. 4 is a reference diagram for explaining a method of storing charge power information according to embodiments of the present invention.
FIG. 5 is a reference diagram for explaining a method for updating charge power information according to embodiments of the present invention.
FIG. 6 is a flowchart of a power management method according to another embodiment of the present invention.
FIG. 7 is a block diagram of a power management apparatus according to embodiments of the present invention.

100: grid
200: load
300: power generation device
400: means of transportation charger
500: battery system
600: energy management apparatus
700: power management apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

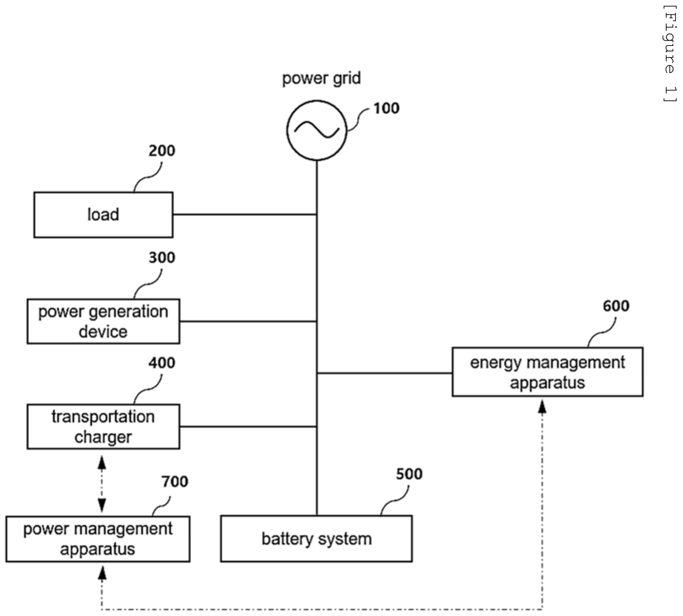

FIG. 1 is a block diagram of an energy storage system that may be linked with the present invention.

An energy management apparatus 600 may be connected to a grid 100, a load 200, a power generation device 300, a means of transportation charger 400, and a battery system 500.

The battery system 500 is electrically connected to the grid 100 and the power generation device 300, and may receive power from the grid 100 and the power generation device 300 and store the power therein.

The battery system 500 is electrically connected to the load 200 and the means of transportation charger 400, and may supply power stored in the battery (hereinafter, ESS battery) included in the energy storage system to the load 200 and the means of transportation charger 400. Meanwhile, the load 200 is electrically connected to the grid 100 and the power generation device 300, and may receive power from the grid 100 and the power generation device 300.

The power generation device 300 is a device that produces power using renewable energy sources, which may be a power generation device that uses one or more energy sources among solar thermal energy, solar photovoltaic energy, bioenergy, wind energy, hydroelectric energy, and geothermal energy. Meanwhile, the type of the power generation device 300 is not an essential component of the present invention, and thus, the scope of the present invention is not limited to these entities.

The means of transportation charger 400 is electrically connected to the grid 100, the power generation device 300, and the battery system 500, and may receive power from the grid 100, the power generation device 300, and the battery system 500. Here, the means of transportation may correspond to any one of an electric vehicle (EV), an electric bicycle, and an electric scooter, and may include a battery therein.

In the embodiments, the means of transportation charger 400 may correspond to a bidirectional charger. Here, the means of transportation charger 400 may charge a battery included in the means of transportation using power supplied from the outside and discharge power stored in the battery to the outside. For example, when an EV is connected to the EV charger, the bidirectional EV charger and the EV battery may function in the same manner as the battery system 500 according to the present invention.

When the means of transportation charger 400 is configured as a bidirectional charger, the means of transportation charger 400 may supply power stored inside to the load 200 and the battery system 500.

The energy management apparatus 600 may be configured to be connected to one or more of the load 200, the power generation device 300, the means of transportation charger 400, and the battery system 500 through a network to transmit and receive data with each other.

The energy management apparatus 600 may be configured to be included within the battery system 500, or may be separately provided outside the battery system 500. For example, the energy management apparatus 600 may be implemented to be included within a Home Energy Management System (HEMS), which is the top-level control system of a residential ESS, or may be implemented to be included within a server of an ESS management company and connected to the HEMS through a network.

The energy management apparatus 600 may collect one or more of the amount of power supplied from the grid 100, the amount of power output toward the grid 100, the amount of charge and discharge of the battery system 500, the amount of power generated by the power generation device 300, the amount of power consumed by the load 200, and the amount of charge and discharge of the means of transportation charger 400, and may calculate the amount of power stored in the battery of the means of transportation or the state of charge (SOC) using the collected information.

The power management apparatus 700 of the means of transportation is an apparatus configured to manage power of the battery in the means of transportation and may collect and manage state information on the power of the battery in the means of transportation. Here, the power management apparatus 700 may be implemented by being included in a computing device used or managed by the owner of the means of transportation. For example, the power management apparatus 700 may be implemented by being included in a personal computer (PC), mobile phone, or tablet PC of the owner of the means of transportation.

The power management apparatus 700 may be connected to one or more of a battery management system (BMS) of the means of transportation, the means of transportation charger 400, and the energy management apparatus 600 through a network, and may collect status information on the battery in the means of transportation.

The power management apparatus 700 may receive a power transaction request from an external charge request device or a power transaction device and may perform a power transaction process in response to the received power transaction request.

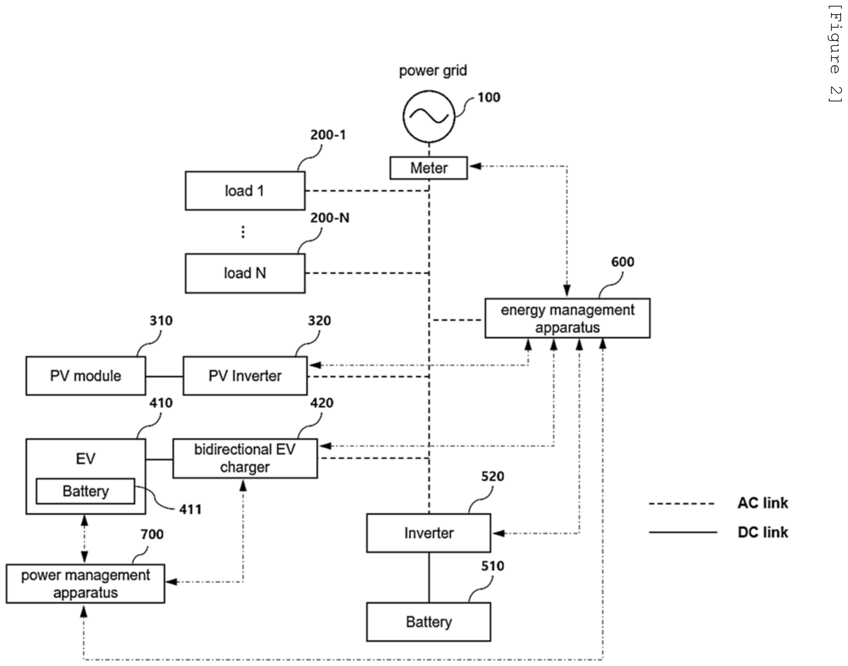

FIG. 2 shows an example of an implementation of an energy storage system that may be linked with the present invention.

Referring to FIG. 2, a battery system 500 may include an ESS battery 510 and an inverter 520 which controls the charging and discharging operation of the ESS battery 510.

The ESS battery 510 is typically implemented in a form in which a plurality of battery packs constitutes a battery rack and a plurality of battery racks constitutes a battery bank. Here, depending on a device or system in which the battery is used, the battery pack may be referred to as a battery module.

A battery management system (BMS) may be installed in each battery. The BMS may monitor the current, voltage, and temperature of each battery rack (or pack) to be managed, calculate the State of Charge (SOC) based on the monitoring results, and control charging and discharging.

The inverter 520 may also be referred to as a power conditioning system (PCS) or a power conversion system (PCS), and may control power supplied from the outside to the ESS battery 510 and power supplied from the ESS battery 510 to the outside. Here, the energy management apparatus 600 may be configured to be connected and operate with the inverter 520 to transmit and receive data each other.

The load 200 may include a plurality of loads 200-1 to 200-N. Here, the load 200 may receive power from one or more of the grid 100, a PV inverter 320, the inverter 520 of the battery system, and the bidirectional EV charger 420.

The PV system may include a PV module 310 (e.g., a photovoltaic panel) and a PV inverter 320 which is an alternating current (AC)/Direct Current (DC) inverter, and an alternating current (AC) terminal of the PV inverter 320 and an AC terminal of an inverter 520 of a battery system may be connected to an AC link.

The bidirectional EV charger 420 may include an AC/DC inverter and an AC terminal may be connected to an AC link.

The bidirectional EV charger 420 may control charging and discharging operations of an EV battery 411 included in an EV 410.

The energy management apparatus 600 may be an upper control device of a grid, a plurality of loads, a PV system, a bidirectional EV charger, and a battery system, and may collect status information of each component and control operations of one or more of the loads, the PV system, the bidirectional EV charger, and the battery system based on the collected status information.

The energy management apparatus 600 may collect one or more of the amount of power supplied from the grid 100, the amount of power output toward the grid 100, the amount of charge and discharge of the ESS battery 510, the amount of power generated by the PV module 310, the amount of power consumed by the load 200, and the amount of charge and discharge of the bidirectional EV charger 420, and may calculate the amount of power stored in the EV battery 411 or the state of charge (SOC) using the collected information.

The power management apparatus 700 of an EV is a device that manages power of the EV battery 411 and may collect and manage state information on the power of the EV battery 411. Here, the power management apparatus 700 may be implemented by being included in a computing device used or managed by an EV owner. For example, the power management apparatus 700 may be implemented by being included in a personal computer (PC), mobile phone, or tablet PC of an EV owner, or may be implemented by being included in an AVN (Audio, Video, Navigation) system of the EV.

The power management apparatus 700 may be connected to one or more of a battery management system (BMS) of the EV 410, an EV charger 420, and an energy management apparatus 600 through a network to collect status information on the EV battery 411. Here, the status information may include the amount of charge power of the EV battery 411, and the amount of charge power may be classified and managed by energy type.

The power management apparatus 700 may receive a power transaction request from an external charge request device or a power transaction device, and perform a power transaction process in response to the received power transaction request.

The energy storage system illustrated in FIG. 2 is an AC coupled ESS in which a PV system, a bidirectional EV charger, a load, and an energy storage system are connected on an AC link. Meanwhile, the present invention may also be applied to a DC coupled ESS in which the output terminal of a PV system, the input terminal of an EV charger, and the output terminal of an energy storage system are connected via a DC link, and the DC link is connected to one terminal of an AC/DC inverter.

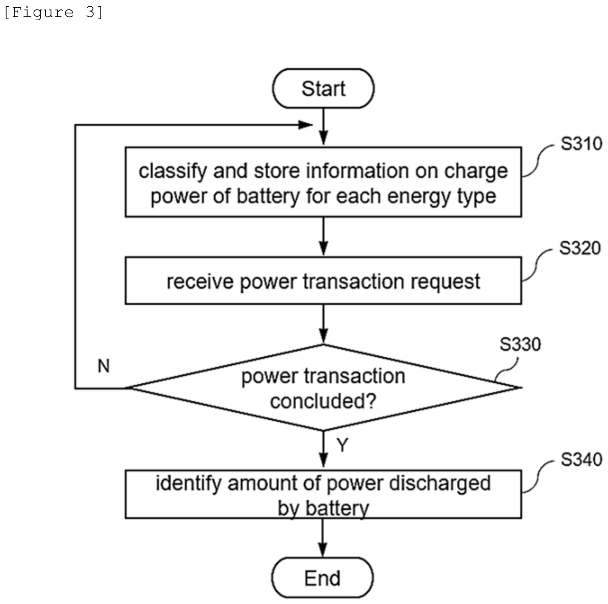

FIG. 3 is a flowchart of a power management method according to embodiments of the present invention.

The power management method according to embodiments of the present invention may be performed by a power management apparatus that manages power of a battery included in a means of transportation. Here, the means of transportation may indicate a means of transportation including a driving device that operates using electric energy, and may include, in embodiments, one or more of an electric vehicle, an electric bicycle, and an electric scooter.

The power management apparatus may classify and store information on charged power of the battery by energy type (S310).

The power management apparatus may classify and record the amount of charged power of the battery into type 1 which is charged using a renewable energy source and type 2 which is charged using grid power. Here, type 1 power may mean power produced by a power generation device using one or more of renewable energy sources among solar thermal energy, solar photovoltaic energy, bioenergy, wind energy, hydroelectric energy, and geothermal energy.

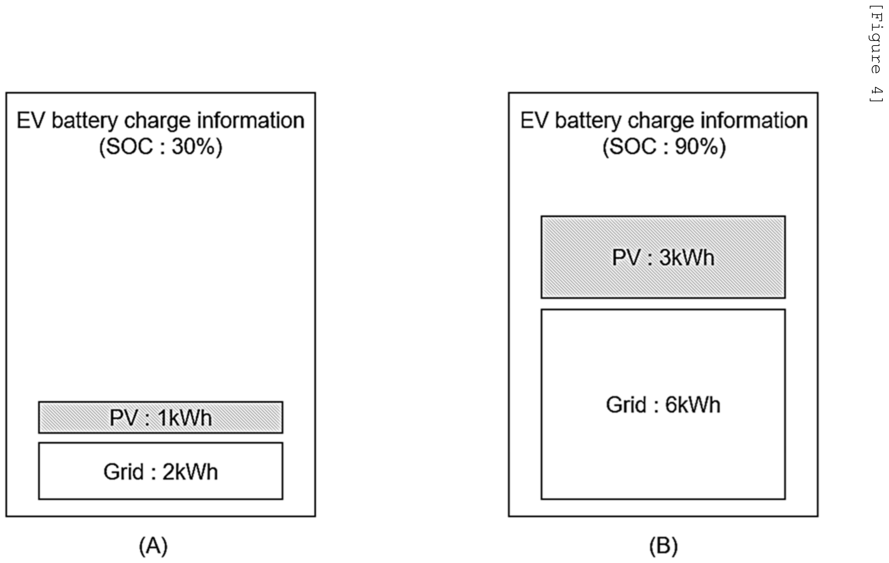

FIG. 4 is a reference diagram for explaining a method of storing charge power information according to embodiments of the present invention. Here, FIG. 4 shows a screen of the power management apparatus that displays the charge power information.

For example, as shown in FIG. 4(A), the power management apparatus may store 3kWh of charged power amount of the EV battery by classifying it into an amount of type 1 power (1kWh) charged with power generated by the PV power generation device and an amount of type 2 power (2kWh) charged with grid power.

In the embodiment, the power management apparatus may receive and record the amount of charged power for each energy type of the battery from an energy management apparatus of an energy storage system at a predetermined time interval.

Specifically, the energy management apparatus may collect one or more of power amount P_grid(t) supplied from the grid or output to the grid side, charge/discharge amount of the ESS battery P_bat_ESS(t), power generation amount P_PV(t) of a renewable energy-based power generation device, consumption power amount of a load P_load(t), and charge/discharge amount P_bat_MV (t) of a battery in a means of transportation. Here, the energy management apparatus may classify the amount of charged power or SOC of the battery in the means of transportation into type 1 and type 2 using the collected information. In other words, the energy management apparatus may monitor the flow of power by energy type (type 1 and type 2) in the energy storage system to calculate the amount of energy type-specific charge power for the battery of the means of transportation, respectively. The energy management apparatus may calculate the amount of energy type-specific charge power of the battery at predetermined times and transmit the calculation result to the power management apparatus.

For example, as shown in FIG. 4(B), when charging of the EV battery is completed, the power management apparatus may receive and store the amount of energy type-specific charge power at the time of charging completion from the energy management apparatus of the energy storage system.

In another embodiment, the power management apparatus may receive and record the amount of energy type-specific charge power of the battery from a BMS located within the means of transportation or a means of transportation charger at predetermined times.

Specifically, the energy management apparatus may monitor the flow of power by energy type (type 1 and type 2) within the energy storage system to calculate the amount of energy type-specific charge power for the battery of the means of transportation, respectively. The energy management apparatus may calculate the amount of charge power of the battery by energy type at a predetermined time interval and transmit the calculation result to a BMS located in a means of transportation or a means of transportation charger. Thereafter, the power management apparatus may receive and record the amount of charge power of the battery by energy type from the BMS located in the means of transportation or the means of transportation charger.

In another embodiment, the power management apparatus may directly calculate the amount of charge power of the battery for each energy type.

Specifically, the power management apparatus may receive, from the energy management apparatus, one or more of power amount P_grid(t) supplied from the grid or output to the grid side, charge/discharge amount P_bat_ESS(t) of the ESS battery, amount of power generation P_PV(t) of the renewable energy-based power generation device, the consumption power amount P_load(t) of the load, and the charge/discharge amount P_bat_MV(t) of the means of transportation battery. Thereafter, the power management apparatus may classify the amount of charged power or SOC of the means of transportation battery into type 1 and type 2 using the collected information.

Referring back to FIG. 3, the power management apparatus may receive a power transaction request from an external device (S320). Here, the power management apparatus may receive the power transaction request from a charge request device or a power transaction device.

The charge request device may refer to a device managed by a power demander who desires renewable energy source-based power supply. For example, the charge request device may correspond to a computing device managed by a company participating in the RE100 campaign.

The power transaction device may refer to a power transaction system or power transaction platform that supports power transactions between multiple power suppliers and power purchasers.

The power transaction request information received from the external device may include one or more of requested energy type, requested amount of charge power, purchase price, location of charging, and power supply time. For example, the power management apparatus may receive power transaction request information including [PV power], [3kWh], [1000 won/kWh], and [14:00 ~ 15:00].

The power management apparatus may determine whether to conclude the power transaction based on the amount of charged power of the battery (S330). Here, the power management apparatus may determine whether to conclude the power transaction based on the amount of charged power of the battery corresponding to a requested energy type included in the power transaction request information.

Specifically, the power management apparatus may determine whether the battery may provide power based on a requested energy type and requested amount of charge power included in the power transaction request information and the amount of charge power of the battery for each energy type. If it is determined that power may be provided, the power management apparatus may determine that the power transaction is concluded. For example, when a power transaction request for 3 kWh of PV power is received, the power management apparatus may check the amount of PV power of a means of transportation battery and determine that the power transaction is concluded, if the confirmed amount of PV power is 4 kWh.

In embodiments, the power management apparatus may determine whether to complete the power transaction based on whether power can be provided and whether the user accepts the transaction. For example, if power supply is possible in response to the requested energy type and the requested amount of charge power and a transaction acceptance signal is input from the user, the power management apparatus may determine that the power transaction is concluded. According to the embodiment, the user may finally approve the conclusion of the power transaction by considering purchase price or power supply time, etc.

If it is determined that the power transaction is concluded, the power management apparatus may transmit power transaction result information including data indicating that the power transaction is concluded to the charge request device or the power transaction device. If it is determined that the power transaction is not concluded, the power management apparatus may transmit power transaction result information including reason why the power transaction has not been concluded to the charge request device or the power transaction device.

After the power transaction has been concluded, the power management apparatus may check the amount of power discharged by the battery of the means of transportation in response to the concluded power transaction (S340).

Specifically, if the power transaction has been concluded, the means of transportation may be moved to a location of charging included in the power transaction request information by the owner and the battery of the means of transportation may be electrically connected to a power device placed at the location and discharged. When the amount of power traded is discharged, the power management apparatus may receive information on the discharge amount of battery from the BMS of the means of transportation.

The power management apparatus may update the stored amount of charge power for each type of energy, based on the amount of power discharged by the battery in response to the power transaction.

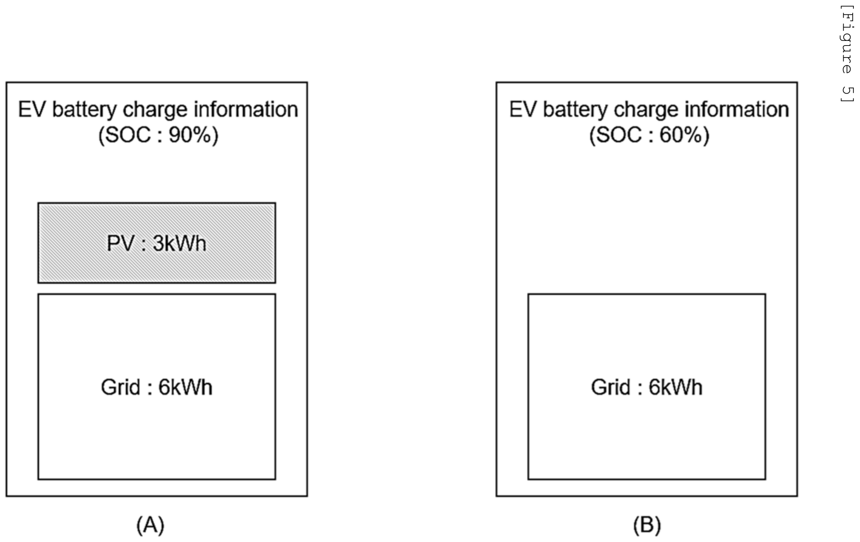

FIG. 5 is a reference diagram for explaining a method for updating charge power information according to embodiments of the present invention. Here, FIG. 5 shows a screen of a power management apparatus that displays charge power information.

As shown in FIG. 5(A), if the power amount of type 1 (PV power) is 3 kWh and the power amount of type 2 (grid power) is 6 kWh before discharge, the power management apparatus may check the discharge amount (3 kWh) according to the power transaction and change the power amount of type 1 (PV power) to 0 kWh, as shown in FIG. 5(B).

When the discharge according to the power transaction is completed, the power management apparatus may provide the discharge amount according to the power transaction to the power transaction device for calculating the power transaction cost. Here, the power transaction device may calculate the power transaction cost (KRW) based on the discharge amount (kWh) according to the power transaction and the power purchase price (KRW/kWh). Thereafter, the power transaction device may provide the calculated power transaction cost to the charge request device, thereby supporting the payment of the power transaction cost.

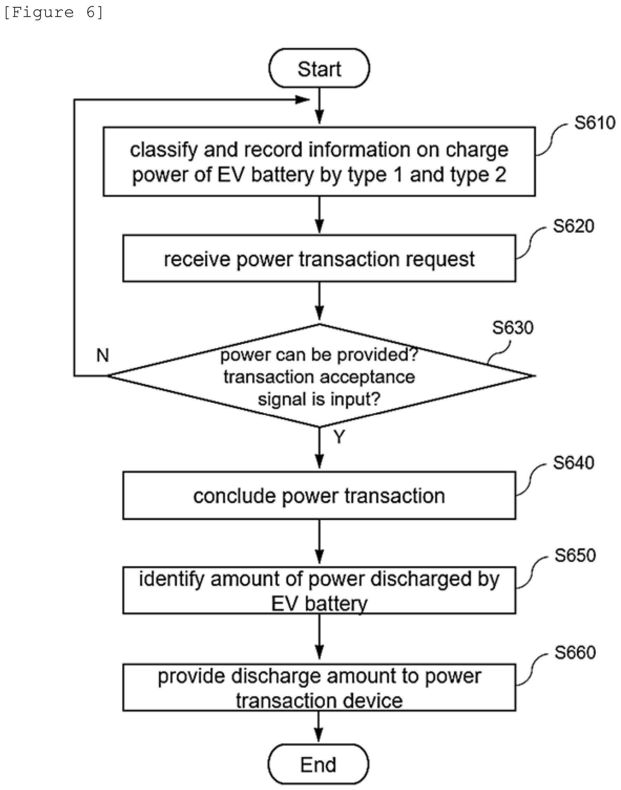

FIG. 6 is a flowchart of a power management method according to another embodiment of the present invention. Here, the power management method illustrated in FIG. 6 may be performed by a power management apparatus that manages power of an EV battery.

The power management apparatus may classify and record information on charge power of an EV battery by energy type (S610).

The power management apparatus may classify and record the amount of charge power of the EV battery by type 1, which is charged using a renewable energy source, and type 2, which is charged using grid power. Here, type 1 power may mean power generated by a power generation device using one or more renewable energy sources among solar thermal energy, solar photovoltaic energy, bioenergy, wind energy, hydroelectric energy, and geothermal energy.

The power management apparatus may receive and record the amount of charge power of the EV battery for each energy type from an energy management apparatus of the energy storage system at predetermined times.

Specifically, the energy management apparatus may collect one or more of power amount P_grid(t) supplied from the grid or output to the grid side, charge/discharge amount P_bat_ESS(t) of the ESS battery, power generation amount P_PV(t) of the renewable energy-based power generation device, consumption power amount P_load(t) of the load, and charge/discharge amount P_bat_EV(t) of the EV battery. Here, the energy management apparatus may classify the amount of charged power or SOC of the EV battery into type 1 and type 2 using the collected information. In other words, the energy management apparatus may monitor the flow of power by energy type (type 1 and type 2) in the energy storage system and calculate the amount of charge power by energy type for the EV battery, respectively. The energy management apparatus may calculate the amount of charged power of the EV battery by energy type at a preset time and transmit the calculation result to the power management apparatus.

The power management apparatus may receive a power transaction request from a charge request device or a power transaction device (S620). Here, the power transaction request information may include one or more of requested energy type, requested amount of charge power, purchase price, location of charging, and power supply time.

The power management apparatus may determine whether to conclude a power transaction based on whether power can be provided and whether the user accepts the transaction (S630).

Specifically, the power management apparatus may determine whether power can be provided by the EV battery based on the requested energy type and requested amount of charge power included in the power transaction request information and the amount of charged power for each energy type of the EV battery.

If the EV battery is in a state where power can be provided and a transaction acceptance signal is input from the user, the power management apparatus may determine that the power transaction is concluded (S640).

Thereafter, the power management apparatus may transmit power transaction result information including data indicating that the power transaction has been established to the charge request device or the power transaction device.

After the power transaction is concluded, the power management apparatus may check the amount of power discharged by the EV battery in response to the completed power transaction (S650).

Specifically, when the power transaction is concluded, the EV may be moved, by its owner, to a location of charging included in the power transaction request information, and the EV battery may be electrically connected to a power device placed at the location and may be discharged. When the discharge equivalent to the amount of power traded is completed, the power management apparatus may receive the discharge amount of the EV battery from a battery management system (BMS) of the EV.

The power management apparatus may update the amount of charged power for each stored energy type based on the amount of power discharged by the EV battery in response to the power transaction.

When the discharge according to the power transaction is completed, the power management apparatus may provide information on the discharge amount according to the power transaction to the power transaction device in order to calculate the power transaction cost (S660). Here, the power transaction device may calculate the power transaction cost (KRW) based on the discharge amount (kWh) according to the power transaction and the power purchase price (KRW/kWh). Thereafter, the power transaction device may provide the calculated power transaction cost to the charge request device to support the power transaction cost to be paid.

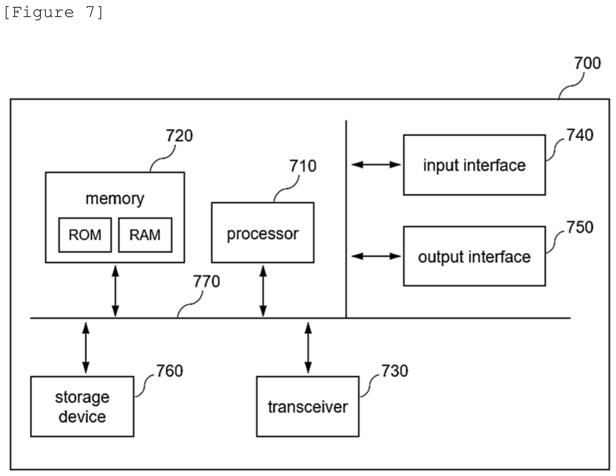

FIG. 7 is a block diagram of a power management apparatus according to embodiments of the present invention.

The power management apparatus 700 according to embodiments of the present invention may be a device that manages power of a battery of a means of transportation, and may be connected and operate with one or more of a battery management device (BMS) of the means of transportation, a charger of the means of transportation, and an energy management apparatus.

The power management apparatus 700 may include at least one processor 710, a memory 720 that stores at least one instruction executed through the processor, and a transceiver 730 that is connected to a network and performs communication.

The at least one instruction may include an instruction to classify information about charge power of the battery by energy type and to store the classified information; an instruction to determine whether to conclude a power transaction based on amount of charge power of a specific energy type, when a request for power transaction for charge power of the specific energy type is received; and an instruction to identify amount of power discharged by the battery in response to the power transaction when the power transaction is completed.

The instruction to classify the information about the charge power of the battery by energy type and to store the classified information may include an instruction to classify and record the amount of charge power of the battery as type 1, which is charged using a renewable energy source, and type 2, which is charged using grid power.

The instruction to classify the information about the charge power of the battery by energy type and to store the classified information may include an instruction to receive and record the amount of charge power for each energy type at predetermined time intervals, from an energy management apparatus of an energy storage system which is connected and communicate with the means of transportation.

The instruction to determine whether to conclude the power transaction may include an instruction to receive a power transaction request information including a requested energy type and the requested amount of charge power from a charge request device or a power trading device; and an instruction to determine whether the battery is capable of providing power, based on the requested energy type and the requested amount of charge power, and charged power amount of the battery for each energy type.

The instruction to determine whether to conclude the power transaction may include an instruction to determine that the power transaction is concluded if the battery is capable of providing power and a transaction acceptance signal from a user is received.

The instruction to identify the amount of power discharged by the battery may include an instruction to update pre-stored amount of charged power for each energy type, based on the power amount discharged by the battery in response to the power transaction.

The at least one instruction may further include an instruction to provide information on the amount of power discharged by the battery to a power trading device, to calculate power transaction costs.

Furthermore, the power management apparatus 700 according to embodiments of the present invention may further include an input interface device 740, an output interface device 750, a storage device 760, etc. Respective components included in the power management apparatus 700 may be connected by a bus 770 and may communicate with each other.

Here, the processor 710 may mean a central processing unit (CPU), a graphics processing unit (GPU), or a dedicated processor on which methods according to embodiments of the present invention are performed. The memory (or storage unit) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A power management apparatus for managing power of the battery included in a means of transportation, the power management apparatus comprising:
at least one processor; and
a memory configured to store at least one instruction executed by the at least one processor,
wherein the at least one instruction includes:
an instruction to classify information about charge power of the battery by energy type and to store the classified information;
an instruction to determine whether to conclude a power transaction based on amount of charge power of a specific energy type, when a request for power transaction for charge power of the specific energy type is received; and
an instruction to identify amount of power discharged by the battery in response to the power transaction when the power transaction is completed.

2. The power management apparatus of claim 1, wherein the instruction to classify the information about the charge power of the battery by energy type and to store the classified information includes:
an instruction to classify and record the amount of charge power of the battery as type 1, which is charged using a renewable energy source, and type 2, which is charged using grid power.

3. The power management apparatus of claim 1, wherein the instruction to classify the information about the charge power of the battery by energy type and to store the classified information includes:
an instruction to receive and record the amount of charge power for each energy type at predetermined time intervals, from an energy management apparatus of an energy storage system which is connected and communicate with the means of transportation.

4. The power management apparatus of claim 1, wherein the instruction to determine whether to conclude the power transaction includes:
an instruction to receive a power transaction request information including a requested energy type and the requested amount of charge power from a charge request device or a power trading device; and
an instruction to determine whether the battery is capable of providing power, based on the requested energy type and the requested amount of charge power, and charged power amount of the battery for each energy type.

5. The power management apparatus of claim 4, wherein the instruction to determine whether to conclude the power transaction includes:
an instruction to determine that the power transaction is concluded if the battery is capable of providing power and a transaction acceptance signal from a user is received.

6. The power management apparatus of claim 1, wherein the instruction to identify the amount of power discharged by the battery includes:
an instruction to update pre-stored amount of charged power for each energy type, based on the power amount discharged by the battery in response to the power transaction.

7. The power management apparatus of claim 1, wherein the at least one instruction further includes:
an instruction to provide information on the amount of power discharged by the battery to a power trading device, to calculate power transaction costs.

8. A power management method performed by a power management apparatus configured to manage power of a battery included in a means of transportation, the power management method comprising:
classifying information about charge power of the battery by energy type and storing the classified information;
determining whether to conclude a power transaction based on amount of charge power of a specific energy type, when a request for power transaction for charge power of the specific energy type is received; and
identifying amount of power discharged by the battery in response to the power transaction when the power transaction is completed.

9. The power management method of claim 8, wherein the classifying the information about the charge power of the battery by energy type and storing the classified information includes:
classifying and recording the amount of charge power of the battery as type 1, which is charged using a renewable energy source, and type 2, which is charged using grid power.

10. The power management method of claim 8, wherein the classifying the information about the charge power of the battery by energy type and storing the classified information includes:
receiving and recording the amount of charge power for each energy type at predetermined time intervals, from an energy management apparatus of an energy storage system which is connected and communicate with the means of transportation.

11. The power management method of claim 8, wherein the determining whether to conclude the power transaction includes:
receiving a power transaction request information including a requested energy type and the requested amount of charge power from a charge request device or a power trading device; and
determining whether the battery is capable of providing power, based on the requested energy type and the requested amount of charge power, and charged power amount of the battery for each energy type.

12. The power management method of claim 11, wherein the determining whether to conclude the power transaction includes:
determining that the power transaction is concluded if the battery is capable of providing power and a transaction acceptance signal from a user is received.

13. The power management method of claim 8, wherein the identifying the amount of power discharged by the battery includes:
updating pre-stored amount of charged power for each energy type, based on the power amount discharged by the battery in response to the power transaction.

14. The power management method of claim 8, further comprising:
providing information on the amount of power discharged by the battery to a power trading device, to calculate power transaction costs.
